# EUROPEAN PATENT SPECIFICATION

(11) **EP 2 795 746 B1**
(45) Date of publication and mention of the grant of the patent: **26.09.2018**
(21) Application number: 12859777.0
(22) Date of filing: 19.12.2012
(51) Int. Cl.: H01S 3/098, G02B 6/02, G02B 6/28, H01S 3/067, G02B 6/14, G02B 6/036, H01S 3/08, H01S 3/042

(54) **HIGH POWER FIBER LASER SYSTEM WITH DISTRIBUTIVE MODE ABSORBER**
HOCHLEISTUNGS-FASERLASERSYSTEM MIT EINEM VERTEILUNGSMODENABSORBER
SYSTÈME LASER À FIBRE DE GRANDE PUISSANCE DOTÉ D'UN ABSORBEUR DE MODE DISTRIBUTIF

(30) Priority: 19.12.2011 US 201161577362 P
(43) Date of publication of application: 29.10.2014
(73) Proprietor: IPG Photonics Corporation, Oxford, Massachusetts 01540 (US)
(72) Inventor: GAPONTSEV, Valentin, Oxford, MA 01540 (US); FOMIN, Valentin, D-57299 Burbach (DE); ABRAMOV, Mikhail, D-57299 Burbach (DE); FERIN, Anton, D-57299 Burbach (DE)
(74) Representative: Kohlmann, Kai
(86) International application number: PCT/US2012/070458
(87) International publication number: WO 2013/096364

(56) References cited:
- JP-A- H09 145 928
- JP-A- 2004 252 057
- JP-A- 2008 187 100
- US-A- 4 019 051
- US-A1- 2010 124 393
- US-A1- 2010 135 339
- US-B1- 8 027 555
- ALEXANDRE WETTER ET AL: "High power cladding light strippers", PROCEEDINGS OF SPIE, S P I E - INTERNATIONAL SOCIETY FOR OPTICAL ENGINEERING, US, vol. 6873, no. 687327, 1 January 2008 (2008-01-01), pages 687327-1, XP002683205, ISSN: 0277-786X, DOI: 10.1117/12.763003
- REZA POOZESH ET AL: "A Novel Method for Stripping Cladding Lights in High Power Fiber Lasers and Amplifiers", JOURNAL OF LIGHTWAVE TECHNOLOGY, IEEE SERVICE CENTER, NEW YORK, NY, US, vol. 30, no. 20, 1 October 2012 (2012-10-01), pages 3199-3202, XP011465464, ISSN: 0733-8724, DOI: 10.1109/JLT.2012.2213295

## Description

### BACKGROUND OF THE DISCLOSURE

### Field of Disclosure

The disclosure relates to high power fiber laser systems. In particular, the disclosure relates to a fiber provided with clad mode absorber operative to decouple undesirable light guided in a cladding.

### Prior Art

High power fiber laser systems ("HPFLS"), are typically configured with one or more amplifying cascades each including an active fiber which is either side or end pumped by multimode (MM) pump light. The latter is not always fully absorbed and continues to propagate along the fiber's inner cladding under a polymeric protective sheath which has a lower refractive index than that of quartz. With increased powers of current pump sources, it is not unusual that this residual pump light guided in the cladding reaches kW levels. Fibers experience bends and other mechanical stresses leading to micro distortions guiding undesirable kW clad light towards the sheath that can be easily damaged.

Still another source of undesired clad light that may destroy a protective sheath includes splice regions between fibers. Spliced fibers are not always uniformly dimensioned and/or not perfectly spliced together which create favorable conditions for excitation of MM light in splice regions. This undesirable light is also guided along the cladding and adds to already high power of unabsorbed pump light. Also, high power light back reflected from the laser treated surface may be coupled in the cladding and thus contribute to high powers that may heat the protective sheath up to critical temperatures.

Furthermore, in high power SM fiber laser systems, the MM radiation guided in the cladding may damage the end regions of the fiber. Finally, the presence of the MM light at the output end of single mode delivery fibers in high power SM laser systems affects the quality of the SM signal light. Based on the foregoing, MM clad light is highly undesirable and should be removed.

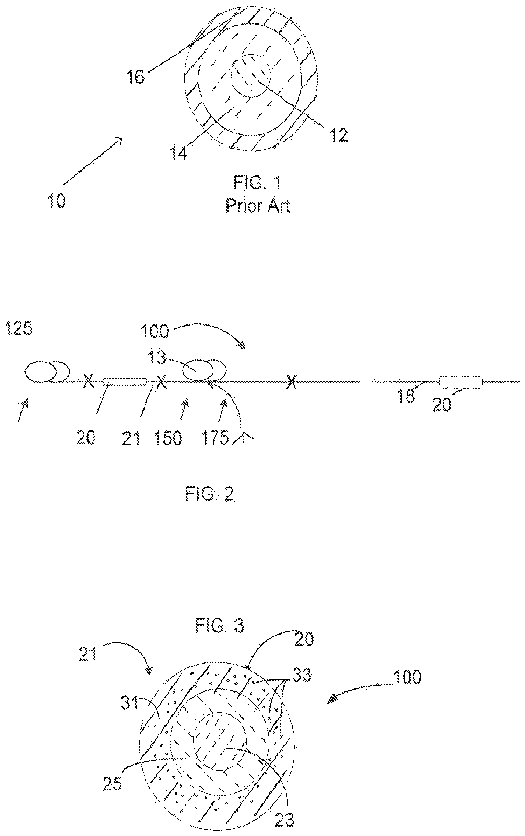

Referring to FIG. 1, typically, a high power fiber laser system is configured with a passive fiber 10 located downstream from amplifying gain blocks and delivering amplified signal light to the surface to be treated by the signal light. The fiber 10 includes a core 12 guiding the signal light, a wave guiding cladding 14 supporting undesirable MM clad light and a polymeric protective sheath 16 preventing the MM light from escaping cladding 14. Optionally, delivery fiber 10 may also have an outer cladding with a refractive index lower than that one of cladding 14. As discussed above, the MM light guided along waveguide cladding 14 is highly undesirable, hazardous and therefore should be decoupled from waveguide cladding 14.

Devices configured to remove clad light and convert the light energy into heat energy are known as, among others, cladding mode absorbers or strippers ("CMA" or "CMS"). Typically, a CMS is provided along a length of one or more passive fibers, for example, a delivery fiber which is stripped from the protective sheath 18 and configured with a higher refractive index than that one of quartz, i.e. wave guiding cladding 14.

Some structural limitations of known CMSs include a low thermal conductivity which leads to localized removal of high power clad light. The known silicone absorbers typically allow decoupling cladding light with a power varying from about 100 to about 400 W, which is considered to be not particularly damaging to silicone and/or other optical components. Yet this power range tolerance is insufficient for modern multi-kW high power fiber systems in which localized removal of powers higher than about 400 W may heat a CMS at temperatures that can easily damage the CMS and other optical components.

Also, the MM light includes both high numerical aperture ("NA") light and low NA light. The high NA light propagates at relatively large angles and may be easily absorbed. However, low NA light propagating at angles of up to about 45° is rarely absorbed and thus continues its propagation almost unabsorbed. Reaching the system output, the unabsorbed MM light considerably worsens the quality of the output signal light.

ALEXANDRE WETTER ET AL: "High Power cladding light strippers", PROCEEDINGS OF SPIE -INTERNATIONAL SOCIETY FOR OPTICAL ENGINEERING, US, vol. 6873, no. 687327, 1 January 2008 (2008-01-01), pages 687327-1, XP002683205, ISSN: 0277-786X, DOI: 10.1117/12.763003 discloses a clad mode stripper unit for a high power fiber laser system, comprising: a passive fiber configured with a core, at least one waveguide cladding surrounding the core, and a polymeric sheath coated upon the cladding and having a discontinuous surface which defines an opening terminating in a plane of the cladding; and a clad mode stripper filling the opening so as to cover an exposed portion of the cladding, the CMS being configured to provide a substantially uniform removal of a MM light from the cladding.

US 8 027 555 B1 discloses a cladding mode stripper for stripping cladding modes from an optical fiber. The cladding mode stripper includes a reflective base and a block of a transparent material disposed on the reflective base. The block of the transparent material has a groove in its bottom surface for the fiber. The fiber is thermally coupled to the base and optically coupled to the groove in the block, for example using an index matching gel. The cladding mode light is reflected from the reflective base and is absorbed in a cover enclosing the block. An additional thin block of transparent heat-conductive material can be placed between the fiber and the reflective base, to prevent the index matching gel from contacting the reflective surface of the base. The disclosed cladding mode stripper can be used to strip cladding modes in fiber lasers, fiber amplifiers, in fiber delivery systems such as delivery fibers for high-power diode lasers or diode laser arrays, and in other systems where cladding mode management is required.

A need therefore exists for a high power CMS used in conjunction with high power fiber laser systems and configured to maximize decoupling of MM clad light from a waveguide cladding.

Another need exists for a CMS configured to provide substantially uniformly distributed absorption of clad light along its entire length.

Yet another need exists for a high power CMS having a high-temperature resistant structure.

### SUMMARY OF THE DISCLOSURE

These and other needs are satisfied by the disclosed clad mode stripper ("CMS"). The CMS is configured with such an optimized length that temperatures, which are reached at a maximum dissipated light power of the removed clad light, do not exceed the desired safe level.

In accordance with one aspect of the disclosure, a silicone-based CMS is configured with such a length that a substantially uniform distribution of MM light removal from a waveguide cladding along the length of the CMS is attained. The realization of such an optimized structure of the disclosed CMS includes impregnating silicone-based host material with particles of aluminum oxide ("Al₂O₃').

The host material is provided with a refractive index lower than that one of the inner cladding and thus confines MM light to the waveguide cladding. However, the particles are distributed in the volume of the host material so as to periodically come into contact with guided MM light and gradually scatter the latter. The scattered MM light propagates along numerous directions including those within the host material. Accordingly, every time clad light comes into contact with the particles, a part of the scattered MM light remains in the host material. However, the maximum dissipated light power of this light part that remains in the host material is such that temperatures at which the host material heats are always lower than a predetermined threshold temperature known to damage the host material. The desired concentration of the particles is selected so as to provide an optimal length of CMS over which the distribution of MM light removal is substantially uniform while the CMS is heated at temperatures not exceeding the threshold.

In accordance with a further aspect of the disclosure, the CMS is configured, at least partially, along a tapered transition region of fiber. The concentration of the particles and cone angle of the transition region are so selected that both high numerical aperture ("NA") modes and low NA modes are substantially fully and uniformly removed from the waveguide cladding along the optimally dimensioned CMS. The maximum dissipating light power of the scattered light along the optimal length of the CMS heats the host material at temperatures lower than a threshold temperature.

### BRIEF DESCRIPTION OF THE DRAWINGS

The above and other features and advantages of the disclosed CMS will become more readily apparent with the following drawings, in which:
FIG. 1 is a cross-sectional view of a prior art fiber configuration provided with a CMS;
FIG. 2 is a diagrammatic view of high power fiber laser system ("HPFLS") provided with the disclosed clad mode absorber ("CMS");
FIG. 3 is a cross-sectional view of the disclosed CMS;
FIG. 4 is a diagrammatic view of a fiber disclosed in accordance with one of the aspects of the present disclosure;
FIG. 5 is a diagrammatic view of the fiber of FIG. 4 provided with the disclosed CMS of FIG. 3;
FIG. 6 is a diagrammatic view of a fiber provided with a combination of absorbers including the disclosed CMS.

### SPECIFIC DESCRIPTION

Reference will now be made in detail to the disclosed mode clad absorber and high power fiber laser system incorporating the absorber. Wherever possible, the same or similar reference numerals are used in the drawings and the description to refer to the same or like parts or steps. The drawings are in simplified form and are far from precise scale. For purposes of convenience and clarity only, directional terms may be used with respect to the plane of the drawing sheets and are not to be construed to limit the scope. Unless specifically noted, it is intended that the words and phrases in the specification and claims be given the ordinary and accustomed meaning to those of ordinary skill in the fiber laser arts. The disclosed fiber system may be configured as an SM system or an MM system and operate in pulsed and/or continuous wave regimes.

FIG. 2 illustrates a diagrammatic view of high power fiber laser system 100 which, for example, is configured as a master oscillator power amplifier ("MOPA") configuration with a master oscillator 125, an amplifier 150 and at least one pump 175. The latter emits pump light which is coupled into amplifier 150 in a direction counter to that one of a forward- propagating signal light which may be, for example, radiated in a single mode ("SM") or multiple modes ("MM") downstream from amplifier 150 at high power levels. Of course, system 100 may include a variety of configurations with any number of oscillators and/or amplifiers which varies between a single device and multiple fiber devices.

As shown, a typical gain block, whether it is amplifier 150 or oscillator 125, is configured with an active fiber 13 doped with rare-earth ions, and two passive fibers spliced to respective ends of active fiber 13. The amplifier 150, for example, amplifies signal light which is guided along system 100 via a delivery passive fiber 18 towards the surface to be laser treated. A clad mode stripper ("CMS") 20 may be provided at any convenient part of system 100. For example, it may be provided along delivery fiber 18. Alternatively or in addition to fiber 18, CMS 20 may be provided along a passive fiber 21 coupled between the gain blocks of system 100 and "cleaning" the waveguide cladding of fiber 21 from unabsorbed pump light from pump 175.

FIG. 3 illustrates a cross-section of passive fiber 21 configured with a stretch of its periphery which has CMS 20. The fiber 21 includes concentrically configured core 23, inner waveguide cladding 25 and a protective sheath. As known by one of ordinary skill in the laser arts, a part of sheath is removed to provide a volume for CMS 20. Optionally, fiber 21 may have a reflective cladding, not shown here.

In accordance with one aspect of the disclosure, CMS 20 includes an elastic host material 31 surrounding cladding 25 and having the refractive index lower than that of this cladding. However, silicone host material 31, for example, Silicone Gel contains a plurality of additives 33, such as particles/diffusers/additives of aluminum oxide Al₂O₃ distributed in the volume of host material 31 which includes the interface between cladding 25 and host material 31. These additives 33 do not absorb light, but scatter it. Scattering is typically omnidirectional which, at contact points between light and particles 33, leaves some light within host material 31.

The concentration and distribution of particles 33 are selected to provide a substantially uniform removal of the MM light from cladding 25 along a length of absorber 20. The lengths are thus so dimensioned that the substantially uniform removal of MM light occurs at maximum dissipating light powers heating the CMS at temperatures below a predetermined thermal threshold known to be damaging to the absorber and other optical components of system 100.

Generally, the size of particles 33 may affect a refractive index of CMS 20 if the particles are reduced to a smaller size than the wavelength of the MM light. Once the refractive index of CMS 20 is altered, i.e., increased to be higher than that one of cladding 25, the scattering of MM clad light may become unidirectional.

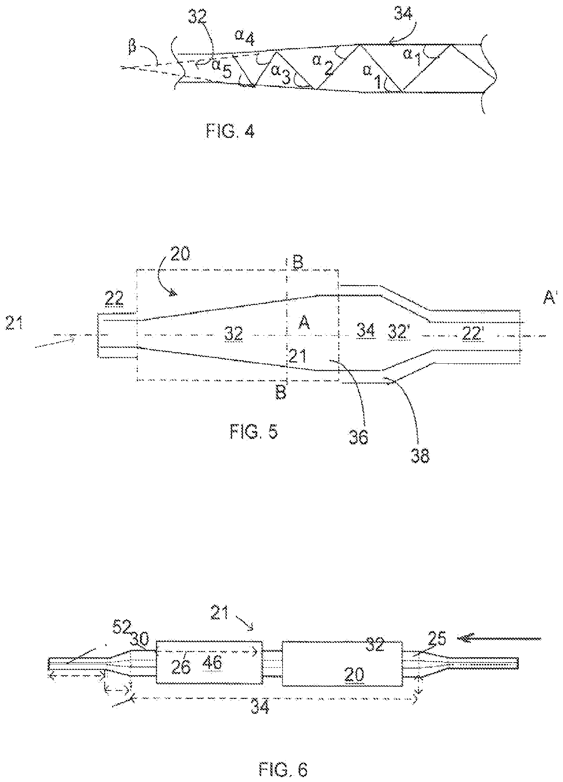

FIG. 4 illustrates a further aspect of the disclosure related to different angles of propagation of multiple clad modes. As known, MM light propagating along a cladding of fiber 25 may have modes with relatively large numerical aperture ("NA") and modes with relatively small NA. When light propagates along a fiber with uniform cross-section such as a region 34, the reflection angle α1 remains constant. The large NA modes can easily come into contact with the outer periphery of the fiber basically along an initial stretch of light path and be removed. However low NA modes may not come in contact with the periphery at all along region 34.

In accordance with this aspect of the disclosure, the fiber is configured with a tapered transition region 32. As shown, once light comes into contact with the surface of the tapered or transition region 32, it bounces off at progressively increasing angle α as long as light propagates through the transition region. In other words, the angle α1<α2< α3<α4<α5 and so on.

Referring to FIG. 5 in addition to FIG. 4, tapered region 32 is configured with a cone angle β selected to provide CMS 20 with an optimal length along which the undesired MM light is substantially uniformly removed at maximum dissipating powers lower than the thermal threshold for a given host material of CMS 20. In other words, a thermal load along the CMA is smooth although high NA light is removed from the fiber along an upstream, initial stretch of light path, whereas low NA light is constantly transformed by the cone to progressively higher NAs until it is removed along the downstream stretch of the light path extending through tapered region 32.

Referring specifically to FIG. 5, one of the preferred configurations of passive fiber 21 includes opposite end regions 22 and 22', respectively, each having a uniform relatively small diameter. The end regions may or may not be uniformly configured depending on the local requirement for system 100. The fiber 21 is further configured with two tapered or transitional regions 32 and 32', respectively, and central region 34 which has a diameter larger than the end regions. In general the cross-section of fiber 21 of FIG. 5 is referred to as a twin bottle-shaped longitudinal cross-section taken along a longitudinal axis A-A'.

The CMS 20 may be provided between end and central regions 22 and 34, respectively, and may terminate within these regions. For example, to minimize the edge of coating 38 from burning, its portion is stripped, for example, along about 20 cm of central region 34 and further along the entire tapered region 32. After that, the thus provided opening is filled, for example, with the compound mass including up to about 60 percent of additives 33. Thereafter, CMA 20 may be placed in a gain block's housing with -50 cm bending diameter. The thus configured CMS has been tested to safely operate at temperatures above 120°C. The location of CMS 20 may be altered and include substantially only transition region 32.

Based on the foregoing, a maximal level of dissipated light power depends on the CMA's length. The particles/diffusers concentration in the silicone material and cone angle of the tapered region are selected so that the host material is heated at safe temperatures at maximal dissipated power levels. Varying two parameters - diffuser concentration and cone angle of the transient area - allows a substantially uniform removal and subsequent emission of the undesired multiple clad modes, including both high and low numerical apertures, at maximum possible power levels.

Referring to FIG. 6, fiber 21 may be provided with two or more CMS 20 and 46, respectively. As discussed above, fiber 21 includes core 52, at least one or multiple claddings 25 and protective sheath 30. The CMS 46 may be a traditional silicone absorber with a substantially localized emission. To protect absorber 46 and other optical components, the dissipated power should not generate temperatures above the thermal threshold. Accordingly, it is possible to configure fiber 21 with disclosed absorber 20 which is operative to remove the larger portion of the MM clad light in a safe and efficient manner leaving thus just a fraction of the entire MM light that is effectively removed downstream from CMS 20 by absorber 46 at desired relatively low temperatures.

A variety of changes of the disclosed structure may be made without departing from the essential characteristics thereof. Thus, it is intended that all matter contained in the above description should be interpreted as illustrative only and in a limiting sense, the scope of the disclosure being defined by the appended claims.

## Claims

1. A clad mode stripper unit for a high power fiber laser system (100), comprising:
a passive fiber (21) configured with a core (23), at least one waveguide cladding (25) surrounding the core (23), and a polymeric sheath coated upon the cladding (25) and having a discontinuous surface which defines an opening terminating in a plane of the cladding (25); and
a clad mode stripper (20) filling the opening so as to cover an exposed portion of the cladding (25), the clad mode stripper (20) being configured to provide a substantially uniform removal of a multimode light from the cladding (25) along an entire length of the clad mode stripper (20) at a maximum dissipated light power heating the clad mode stripper (20) at a temperature lower than a thermal threshold at which the clad mode stripper (20) is damaged,
**characterized in that**
the clad mode stripper (20) includes a host material (31) with a refractive index lower than that one of the cladding (25) and a plurality of diffusers impregnated in the host material (31) and scattering the multimode light, which is incident upon the clad mode stripper (20), so that a removal of the multimode light is substantially uniformly distributed along the entire length of the clad mode stripper (20).

2. The clad mode stripper unit of claim 1, wherein the diffusers are impregnated at a concentration selected to provide the clad mode stripper (20) with the entire length which is optimally dimensioned to provide the uniform multimode MM light removal from the cladding (25) along the length at the maximum dissipated power.

3. The clad mode stripper unit of claim 1, wherein the host material (31) includes silicone, and the diffusers include aluminum oxide particles.

4. The clad mode stripper unit of claim 1, wherein the passive fiber (21) has adjacent central uniformly dimensioned (34) and tapered (32) regions, the tapered region (32) at least partially coextending with the clad mode stripper (20) and having a cone angle selected so as to provide the clad mode stripper (20) with the entire length so optimally dimensioned that the removal of the multimode light is substantially uniformly distributed along the length at the maximum dissipated power.

5. The clad mode stripper unit of claim 4, wherein the passive fiber (21) further has first and second end regions (22, 22') with the first end region (22) adjoining the tapered region (32), and another tapered region (32') bridging the second end region (22') and the central region (34), the clad mode stripper (20) extending between the uniformly dimensioned central region (34) and the first end region (22).

6. The clad mode stripper unit of claim 5, wherein the first and second end regions (22, 22') each have a cross-section smaller than that one of the central region (34), the first and second end regions (22, 22') having a uniform configuration or different configurations, and the tapered regions (32, 32') being uniformly or non-uniformly configured.

7. The clad mode stripper unit of claim 6, wherein the tapered region (32) is longer than the another tapered region (32').

8. The clad mode stripper unit of claim 4, wherein the cone angle is selected so that that the clad mode stripper (20) is operative to remove low numerical aperture modes of the multimode light.

9. The clad mode stripper unit of claim 1 further comprising an absorber (46) located downstream from the clad mode stripper (20) and operative to locally remove a remaining portion of the multimode light not stripped by the clad mode stripper (20).

10. A high power fiber laser system (100), comprising:
at least one gain block operative to emit a high power radiation;
a plurality of passive fibers (21) optically coupled to the gain block, the passive fibers (21) each having a core (23), at least one cladding (25) surrounding the core (23) and configured to guide multimode light, and a polymeric sheath coated upon the cladding (25), at least one of the passive fibers (21) having a part of the polymeric sheath removed so as to expose the cladding (25);
a clad mode stripper (20) applied to the exposed cladding (25) and configured to provide a substantially uniform removal of the multimode light from the cladding (25) along an entire length of the clad mode stripper (20) at a maximum dissipated light power heating the clad mode stripper (20) at a temperature lower than a thermal threshold at which the clad mode stripper (20) is damaged **characterized in that** the clad mode stripper (20) includes a host material (31) with a refractive index lower than that one of the cladding (25) and a plurality of diffusers impregnated in the host material (31) to scatter the multimode light incident upon the clad mode stripper (20) so that a removal of the multimode light is substantially uniformly distributed along the entire length of the clad mode stripper (20).

11. The high power fiber laser system (100) of claim 10 further comprising an additional gain block and at least one pump (175) configured to pump the gain block in a direction counter to a direction of propagation of signal light, the gain blocks defining a master oscillator power amplifier configuration, wherein the gain block is configured as a single mode power amplifier (150) and the additional gain block includes a single mode master oscillator (125), the at least one of the passive fibers (21) configured with the cladding mode stripper (20) being a delivery fiber or a fiber between the gain block and the additional gain block.

12. The high power fiber laser system (100) of claim 10 wherein the gain block is operative to emit pulsed high power radiation , the radiation being emitted in a single mode or multiple modes.

13. The high power fiber laser system (100) of claim 10, wherein the diffusers are impregnated at a concentration selected to provide the cladding mode stripper (20) with the entire length which is optimally dimensioned to provide the uniform multimode light removal from the cladding (25) along the length at the maximum dissipated power.

14. The high power fiber laser system (100) of claim 10, wherein the host material (31) includes silicone, and the diffusers include aluminum oxide particles.

15. The high power fiber laser system (100) of claim 10, wherein the diffusers each are dimensioned so as to provide a substantially unidirectional scattering of the multimode light into the host material (31).

16. The high power fiber laser system (100) of claim 11, wherein the at least one of the passive fibers (21) has adjacent central uniformly dimensioned (34) and tapered (32) regions, the tapered region (32) at least partially coextending with the clad mode stripper (20) and having a cone angle selected so as to provide the clad mode stripper (20) with the entire length so optimally dimensioned that the removal of the multimode light is substantially uniformly distributed along the length at the maximum dissipated power.

17. The high power fiber laser system (100) of claim 16, wherein the at least one of the passive fibers further has first and second end regions (22, 22') with the first end region (22) adjoining the tapered region (32), and another tapered region (32') bridging the second end (22') region and the central region (34), the clad mode stripper (20) extending between the uniformly dimensioned central region (34) and the first end region (22).

18. The high power fiber laser system (100) of claim 17, wherein the first and second end regions (22, 22') each have a cross-section smaller than that one of the central region (34), the first and second end regions (22, 22') having a uniform configuration or different configurations, and the tapered regions (32, 32') being uniformly or non-uniformly configured.

19. The high power fiber laser system (100) of claim 17, wherein the tapered region (32) is longer than the another tapered region (32').

20. The high power fiber laser system (100) of claim 16, wherein the cone angle is selected so that that the clad mode stripper (20) is operative to remove low numerical aperture modes of the multimode light.

21. The high power fiber laser system (100) of claim 10 wherein the gain block is operative to emit continuous high power radiation, the radiation being emitted in a single mode or multiple modes.

## Patentansprüche

1. Mantelmodenabstreifereinheit für ein Hochleistungs-Faserlasersystem (100), umfassend:
eine passive Faser (21), die mit einem Kern (23) konfiguriert ist, wobei zumindest ein Wellenleitermantel (25) den Kern (23) umgibt, und eine Polymerhülle, die auf den Mantel (25) aufgebracht ist und eine diskontinuierliche Oberfläche hat, die eine Öffnung definiert, die in einer Ebene des Mantels (25) endet; und
einen Mantelmodenabstreifer (20), der die Öffnung füllt, um einen freiliegenden Abschnitt des Mantels (25) zu bedecken, wobei der Mantelmodenabstreifer (20) konfiguriert ist, eine im Wesentlichen gleichförmige Entfernung eines Multimodenlichts von dem Mantel (25) entlang einer Gesamtlänge des Mantelmodenabstreifers (20) bei maximaler Streulichtleistung vorzusehen, die den Mantelmodenabstreifer (20) bei einer Temperatur erwärmt, die geringer als ein Wärmeschwellenwert ist, bei dem der Mantelmodenabstreifer (20) beschädigt wird,
**dadurch gekennzeichnet, dass**
der Mantelmodenabstreifer (20) ein Host-Material (31) mit einem Brechungsindex enthält, der niedriger als jener des Mantels (25) ist, und mehrere Diffusoren, die in.das Host-Material (31) imprägniert sind und das Mehrfachmodenlicht streuen, das auf den Mantelmodenabstreifer (20) fällt, sodass eine Entfernung des Mehrfachmodenlicht im Wesentlichen gleichförmig entlang der Gesamtlänge des Mantelmodenabstreifers (20) verteilt ist.

2. Mantelmodenabstreifereinheit nach Anspruch 1, wobei die Diffusoren bei einer Konzentration imprägniert sind, die so gewählt ist, dass der Mantelmodenabstreifer (20) mit der Gesamtlänge vorgesehen ist, die optimal dimensioniert ist, um die gleichförmige Mehrfachmodenlichtentfernung vom Mantel (25) entlang der Länge bei maximaler Streuleistung vorzusehen.

3. Mantelmodenabstreifereinheit nach Anspruch 1, wobei das Host-Material (31) Silikon enthält und die Diffusoren Aluminiumoxidpartikel enthalten.

4. Mantelmodenabstreifereinheit nach Anspruch1, wobei die passive Faser (21)benachbarte, zentrale, gleichförmig dimensionierte (34) und verjüngte(32) Regionen hat, wobei sich die verjüngte Region (32) zumindest teilweise gemeinsam mit dem Mantelmodenabstreifer (20) erstreckt und einen Kegelwinkel hat, der so gewählt ist, dass der Mantelmodenabstreifer (20) mit der Gesamtlänge so optimal dimensioniert vorgesehen ist, dass die Entfernung des Mehrfachmodenlichts entlang der Länge bei maximaler Streuleistung im Wesentlichen gleichförmig verteilt ist.

5. Mantelmodenabstreifereinheit nach Anspruch 4, wobei die passive Faser (21)ferner erste und zweite Endregionen (22, 22') hat, wobei die erste Endregion(22) an die verjüngte Region (32) angrenzt und eine andere verjüngte Region (32') die zweite Endregion(22') und die zentrale Region (34) überbrückt, wobei sich der Mantelmodenabstreifer (20) zwischen der gleichförmig dimensionierten zentralen Region (34) und der ersten Endregion (22) erstreckt.

6. Mantelmodenabstreifereinheit nach Anspruch 5, wobei die ersten und zweiten Endregionen(22, 22') jeweils einen Querschnitt haben, der kleiner als jener der zentralen Region (34) ist, wobei die ersten und zweiten Endregionen (22, 22') eine gleichförmige Konfiguration oder unterschiedliche Konfigurationen haben und die verjüngten Regionen(32, 32') gleichförmig oder nicht gleichförmig konfiguriert sind.

7. Mantelmodenabstreifereinheit nach Anspruch6, wobei die verjüngte Region (32) länger als die andere verjüngte Region (32') ist.

8. Mantelmodenabstreifereinheit nach Anspruch 4, wobei der Kegelwinkel so gewählt ist, dass der Mantelmodenabstreifer (20) betriebsbereit ist, Moden mit niedriger numerischer Apertur des Mehrfachmodenlichts zu entfernen.

9. Mantelmodenabstreifereinheit nach Anspruch 1, ferner umfassend einen Absorber (46), der stromabwärts des Mantelmodenabstreifers (20) gelegen ist und betriebsbereit ist, lokal einen verbleibenden Abschnitt des Mehrfachmodenlichts zu entfernen, das durch den Mantelmodenabstreifer (20) nicht abgestreift wurde.

10. Hochleistungs-Faserlasersystem (100), umfassend:
zumindest einen Verstärkungsblock, der betriebsbereit ist, Hochleistungsstrahlung auszustrahlen;
mehrere passive Fasern (21), die optisch an den Verstärkungsblock gekoppelt sind, wobei die passiven Fasern (21)jeweils einen Kern (23), zumindest einen Mantel (25), der den Kern (23) umgibt und konfiguriert sind, das Mehrfachmodenlicht zu leiten, und eine Polymerhülle, die auf dem Mantel (25) aufgebracht ist, umfassen, wobei bei zumindest einer der passiven Fasern (21) ein Teil der Polymerhülle entfernt ist, um den Mantel (25) zu exponieren;
einen Mantelmodenabstreifer (20), der auf den exponierten Mantel (25) aufgebracht und konfiguriert ist, eine im Wesentlichen gleichförmige Entfernung des Mehrfachmodenlichts vom Mantel (25) entlang einer Gesamtlänge des Mantelmodenabstreifers (20) bei maximaler Streulichtleistung vorzusehen, die den Mantelmodenabstreifer (20) bei einer Temperatur erwärmt, die geringer als ein Wärmeschwellenwert ist, bei dem der Mantelmodenabstreifer (20) beschädigt wird,
**dadurch gekennzeichnet, dass**
der Mantelmodenabstreifer (20) ein Host-Material (31) mit einem Brechungsindex enthält, der niedriger als jener des Mantels (25) ist, und mehrere Diffusoren, die in das Host-Material (31) imprägniert sind und das Mehrfachmodenlicht streuen, das auf den Mantelmodenabstreifer (20) fällt, sodass eine Entfernung des Mehrfachmodenlicht im Wesentlichen gleichförmig entlang der Gesamtlänge des Mantelmodenabstreifers (20) verteilt ist.

11. Hochleistungs-Faserlasersystem (100) nach Anspruch 10, ferner umfassend einen zusätzlichen Verstärkungsblock und zumindest eine Pumpe (175), um den Verstärkungsblock in einer Richtung zu pumpen, die einer Ausbreitungsrichtung von Signallicht entgegengesetzt ist, wobei die Verstärkungsblöcke eine Master-Oszillatorleistungsverstärker-Konfiguration definieren, wobei der Verstärkungsblock als Einzelmodusleistungsverstärker (150) konfiguriert ist und der zusätzliche Verstärkungsblockeinen Einzelmodus-Master-Oszillator (125) enthält, wobei die zumindest eine der passiven Fasern (21) so konfiguriert ist, dass der Mantelmodenabstreifer (20) eine Abgabefaser oder eine Faser zwischen dem Verstärkungsblock und dem zusätzlichen Verstärkungsblock ist.

12. Hochleistungs-Faserlasersystem (100) nach Anspruch 10, wobei der Verstärkungsblock betriebsbereit ist, gepulste Hochleistungsstrahlung auszustrahlen, wobei die Strahlung in einem Einzelmodus oder in Mehrfachmodi ausgestrahlt wird.

13. Hochleistungs-Faserlasersystem (100) nach Anspruch 10, wobei die Diffusoren mit einer Konzentration imprägniert sind, die so gewählt ist, dass der Mantelmodenabstreifer (20) mit der Gesamtlänge vorgesehen ist, die optimal dimensioniert ist, um die gleichförmige Mehrfachmodenlichtentfernung vom Mantel (25) entlang der Länge bei maximaler Streuleistung vorzusehen.

14. Hochleistungs-Faserlasersystem (100) nach Anspruch 10, wobei das Host-Material (31) Silikon enthält und die Diffusoren Aluminiumoxidpartikel enthalten.

15. Hochleistungs-Faserlasersystem (100) nach Anspruch 10, wobei die Diffusoren jeweils so dimensioniert sind, dass eine im Wesentlichen gleichförmige Streuung des Mehrfachmodenlichts in das Host-Material (31) vorgesehen ist.

16. Hochleistungs-Faserlasersystem (100) nach Anspruch 11, wobei die zumindest eine der passiven Fasern (21) benachbarte, zentrale, gleichförmig dimensionierte (34) und verjüngte (32) Regionen hat, wobei sich die verjüngte Region (32) zumindest teilweise gemeinsam mit dem Mantelmodenabstreifer (20) erstreckt und einen Kegelwinkel hat, der so gewählt ist, dass der Mantelmodenabstreifer (20) mit der Gesamtlänge so optimal dimensioniert vorgesehen ist, dass die Entfernung des Mehrfachmodenlichts entlang der Länge bei maximaler Streuleistung im Wesentlichen gleichförmig verteilt ist.

17. Hochleistungs-Faserlasersystem (100) nach Anspruch 16, wobei die zumindest eine der passiven Fasern ferner erste und zweite Endregionen (22, 22') hat, wobei die erste Endregion (22) an die verjüngte Region (32) angrenzt und eine andere verjüngte Region (32') die zweite Endregion (22') und die zentrale Region (34) überbrückt, wobei sich der Mantelmodenabstreifer (20) zwischen der gleichförmig dimensionierten zentralen Region (34) und der ersten Endregion (22) erstreckt.

18. Hochleistungs-Faserlasersystem (100) nach Anspruch 17, wobei die ersten und zweiten Endregionen (22, 22') jeweils einen Querschnitt haben, der kleiner als jener der zentralen Region (34) ist, wobei die ersten und zweiten Endregionen (22, 22') eine gleichförmige Konfiguration oder unterschiedliche Konfigurationen haben und die verjüngten Regionen (32, 32') gleichförmig oder nicht gleichförmig konfiguriert sind.

19. Hochleistungs-Faserlasersystem (100) nach Anspruch 17, wobei die verjüngte Region (32) länger als die andere verjüngte Region (32') ist.

20. Hochleistungs-Faserlasersystem (100) nach Anspruch 16, wobei der Kegelwinkel so gewählt ist, dass der Mantelmodenabstreifer (20) betriebsbereit ist, Moden mit niedriger numerischer Apertur des Mehrfachmodenlichts zu entfernen.

21. Hochleistungs-Faserlasersystem (100) nach Anspruch 10, wobei der Verstärkungsblock betriebsbereit ist, kontinuierlich Hochleistungsstrahlung auszustrahlen, wobei die Strahlung in einem Einzelmodus oder in Mehrfachmodi ausgestrahlt wird.

## Revendications

1. Unité de suppression de mode de gaine pour un système laser à fibre de haute puissance (100), comprenant :
une fibre passive (21) configurée avec un coeur (23), au moins un gainage de guide d'ondes (25) entourant le coeur (23) et une enveloppe polymère revêtue sur le gainage (25) et ayant une surface discontinue qui définit une ouverture se terminant dans un plan du gainage (25) ; et
un suppresseur de mode de gaine (20) remplissant l'ouverture de manière à recouvrir une partie exposée du gainage (25), le suppresseur de mode de gaine (20) étant configuré pour fournir une élimination sensiblement uniforme d'une lumière multimode du gainage (25) le long d'une longueur entière du suppresseur de mode de gaine (20) à une puissance de lumière dissipée maximale chauffant le suppresseur de mode de gaine (20) à une température inférieure à une température de seuil à laquelle le suppresseur de mode de gaine (20) est endommagé,
**caractérisée en ce que**
le suppresseur de mode de gaine (20) comprend un matériau hôte (31) avec un indice de réfraction inférieur à celui du gainage (25) et une pluralité de diffuseurs introduits par imprégnation dans le matériau hôte (31) et diffusant de la lumière multimode, laquelle est incidente sur le suppresseur de mode de gaine (20), de sorte qu'une élimination de la lumière multimode est sensiblement uniformément répartie le long de la longueur entière du suppresseur de mode de gaine (20).

2. Unité de suppression de mode de gaine selon la revendication 1, dans laquelle les diffuseurs sont introduits par imprégnation à une concentration sélectionnée pour doter le suppresseur de mode de gaine (20) de la longueur entière dimensionnée de façon optimale pour fournir l'élimination de lumière multimode uniforme du gainage (25) le long de la longueur à la puissance dissipée maximale.

3. Unité de suppression de mode de gaine selon la revendication 1, dans laquelle le matériau hôte (31) comprend de la silicone et les diffuseurs comprennent des particules d'oxyde d'aluminium.

4. Unité de suppression de mode de gaine selon la revendication 1, dans laquelle la fibre passive (21) a des zones centrale dimensionnées uniformément (34) et effilées (32) adjacentes, la zone effilée (32) s'étendant au moins partiellement en commun avec le suppresseur de mode de gaine (20) et ayant un angle de cône sélectionné de manière à doter le suppresseur de mode de gaine (20) de la longueur entière dimensionnée de façon si optimale, que l'élimination de la lumière multimode est sensiblement uniformément répartie le long de la longueur à la puissance dissipée maximale.

5. Unité de suppression de mode de gaine selon la revendication 4, dans laquelle la fibre passive (21) a en outre des première et deuxième zones d'extrémité (22, 22') avec la première zone d'extrémité (22) adjacente à la zone effilée (32), et une autre zone effilée (32') jointive entre la deuxième zone d'extrémité (22') et la zone centrale (34), le suppresseur de mode de gaine (20) s'étendant entre la zone centrale dimensionnée uniformément (34) et la première zone d'extrémité (22).

6. Unité de suppression de mode de gaine selon la revendication 5, dans laquelle les première et deuxième zones d'extrémité (22, 22') ont chacune une section transversale plus petite que celle de la zone centrale (34), les première et deuxième zones d'extrémité (22, 22') ayant une configuration uniforme ou des configurations différentes, et les zones effilées (32, 32') étant configurées de façon uniforme ou non uniforme.

7. Unité de suppression de mode de gaine selon la revendication 6, dans laquelle la zone effilée (32) est plus longue que l'autre zone effilée (32').

8. Unité de suppression de mode de gaine selon la revendication 4, dans laquelle l'angle de cône est sélectionné de sorte que le suppresseur de mode de gaine (20) est opératif pour éliminer des modes à faible ouverture numérique de la lumière multimode.

9. Unité de suppression de mode de gaine selon la revendication 1, comprenant en outre un absorbeur (46) situé en aval du suppresseur de mode de gaine (20) et opératif pour éliminer localement une partie résiduelle de la lumière multimode non supprimée par le suppresseur de mode de gaine (20).

10. Système laser à fibre de haute puissance (100) comprenant :
au moins un bloc de gain opératif pour émettre un rayonnement de haute puissance ;
une pluralité de fibres passives (21) couplées de façon optique au bloc de gain, les fibres passives (21) ayant chacune un coeur (23), au moins un gainage (25) entourant le coeur (23) et configuré pour guider de la lumière multimode, et une enveloppe polymère revêtue sur le gainage (25), au moins l'une des fibres passives (21) ayant une partie de l'enveloppe polymère éliminée de manière à exposer le gainage (25) ;
un suppresseur de mode de gaine (20) appliqué au gainage (25) exposé et configuré pour fournir une élimination sensiblement uniforme de la lumière multimode du gainage (25) le long d'une longueur entière du suppresseur de mode de gaine (20) à une puissance de lumière dissipée maximale chauffant le suppresseur de mode de gaine (20) à une température inférieure à une température de seuil à laquelle le suppresseur de mode de gaine (20) est endommagé,
**caractérisé en ce que** le suppresseur de mode de gaine (20) comprend un matériau hôte (31) avec un indice de réfraction inférieur à celui du gainage (25) et une pluralité de diffuseurs introduits par imprégnation dans le matériau hôte (31) pour diffuser la lumière multimode incidente sur le suppresseur de mode de gaine (20) de sorte qu'une élimination de la lumière multimode est sensiblement uniformément répartie le long de la longueur entière du suppresseur de mode de gaine (20).

11. Système laser à fibre de haute puissance (100) selon la revendication 10, comprenant en outre un bloc de gain additionnel et au moins une pompe (175) configurée pour le pompage du bloc de gain dans une direction contraire à une direction de propagation d'un signal lumineux, le bloc de gain définissant une configuration d'amplificateur de puissance et oscillateur maître, dans lequel le bloc de gain est configuré en tant qu'amplificateur de puissance monomode (150) et le bloc de gain additionnel comprend un oscillateur maître monomode (125), l'au moins une des fibres passives (21) configurée avec le suppresseur de mode de gaine (20) étant une fibre de transmission ou une fibre entre le bloc de gain et le bloc de gain additionnel.

12. Système laser à fibre de haute puissance (100) selon la revendication 10, dans lequel le bloc de gain est opératif pour émettre un rayonnement de haute puissance pulsé, le rayonnement étant émis dans un seul mode ou de multiples modes.

13. Système laser à fibre de haute puissance (100) selon la revendication 10, dans lequel les diffuseurs sont introduits par imprégnation à une concentration sélectionnée pour doter le suppresseur de mode de gaine (20) de la longueur entière qui est dimensionnée de façon optimale pour fournir l'élimination de lumière multimode uniforme du gainage (25) le long de la longueur à la puissance dissipée maximale.

14. Système laser à fibre de haute puissance (100) selon la revendication 10, dans lequel le matériau hôte (31) comprend de la silicone et les diffuseurs comprennent des particules d'oxyde d'aluminium.

15. Système laser à fibre de haute puissance (100) selon la revendication 10, dans lequel les diffuseurs sont dimensionnés chacun de telle sorte à fournir une diffusion sensiblement unidirectionnelle de la lumière multimode dans le matériau hôte (31).

16. Système laser à fibre de haute puissance (100) selon la revendication 11, dans lequel l'au moins une des fibres passives (21) a des zones centrale dimensionnée uniformément (34) et effilée (32) adjacentes, la zone effilée (32) s'étendant au moins partiellement en commun avec le suppresseur de mode de gaine (20) et ayant un angle de cône sélectionné de manière à doter le suppresseur de mode de gaine (20) de l'entière longueur dimensionnée de façon si optimale que l'élimination de la lumière multimode est sensiblement uniformément répartie le long de la longueur à la puissance dissipée maximale.

17. Système laser à fibre de haute puissance (100) selon la revendication 16, dans lequel l'au moins une des fibres passives a en outre des première et deuxième zones d'extrémité (22, 22') avec la première zone d'extrémité (22) adjacente à la zone effilée (32), et une autre zone effilée (32') jointive entre la deuxième zone d'extrémité (22') et la zone centrale (34), le suppresseur de mode de gaine (20) s'étendant entre la zone centrale dimensionnée uniformément (34) et la première zone d'extrémité (22).

18. Système laser à fibre de haute puissance (100) selon la revendication 17, dans lequel les première et deuxième zones d'extrémité (22, 22') ont chacune une section transversale plus petite que celle de la zone centrale (34), les première et deuxième zones d'extrémité (22, 22') ayant une configuration uniforme ou des configurations différentes, et les zones effilées (32, 32') étant configurées de façon uniforme ou non uniforme.

19. Système laser à fibre de haute puissance (100) selon la revendication 17, dans lequel la zone effilée (32) est plus longue que l'autre zone effilée (32').

20. Système laser à fibre de haute puissance (100) selon la revendication 16, dans lequel l'angle de cône est sélectionné de sorte que le suppresseur de mode de gaine (20) est opératif pour éliminer des modes à faible ouverture numérique de la lumière multimode.

21. Système laser à fibre de haute puissance (100) selon la revendication 10, dans lequel le bloc de gain est opératif pour émettre un rayonnement de haute puissance continu, le rayonnement étant émis dans un mode unique ou de multiples modes.
